# EUROPÄISCHE PATENTANMELDUNG

(11) **EP 3 322 078 A1**
(43) Veröffentlichungstag der Anmeldung: **16.05.2018**
(21) Anmeldenummer: 17201533.1
(22) Anmeldetag: 14.11.2017
(51) Int. Cl.: H02M 3/335

(54) **KÜHL- UND/ODER GEFRIERGERÄT**

(30) Priorität: 14.11.2016 DE 102016013575; 15.12.2016 DE 102016014973
(71) Anmelder: Liebherr-Hausgeräte Ochsenhausen GmbH, 88416 Ochsenhausen (DE)
(72) Erfinder: Polonskiy, Yevgen, 88416 Ochsenhausen (DE)
(74) Vertreter: Herrmann, Uwe

(57) **Zusammenfassung**

Die vorliegende Erfindung betrifft ein Kühl- und/oder Gefriergerät mit einem Netzanschluss und wenigstens einem Schaltnetzteil zur Spannungsversorgung wenigstens eines elektrischen Verbrauchers, wobei ein Schaltwandler des wenigstens einen Schaltnetzteils ein Resonanzwandler ist.

## Beschreibung

Die Erfindung betrifft ein Kühl- und/oder Gefriergerät mit einem Netzanschluss und wenigstens einem Schaltnetzteil zur Spannungsversorgung wenigstens eines elektrischen Verbrauchers.

Die elektrischen Verbraucher eines Kühl- und/oder Gefriergerätes werden üblicherweise über den Netzanschluss des Kühl- und/oder Gefriergerätes durch ein vorzugsweise öffentliches Stromnetz versorgt. Für die unterschiedlichen Eingangsspannungen der Verbraucher ist zumindest ein integriertes Schaltnetzteil vorgesehen, dass die eingehende Netzspannung in die erforderliche Gleich- oder Wechselspannung des oder der zu versorgenden Verbraucher wandelt. Ein Beispiel ist bspw. die Inverterschaltung des Kühlkompressors, die eine Drehzahlregelung des Kompressormotors durch Spannungswandlung ermöglicht.

Im Sinne der Energieeffizienz moderner Geräte ist es wünschenswert Schaltnetzteile mit möglichst optimalem Wirkungsgrad einzusetzen, ohne dabei jedoch die anfallenden Herstellungskosten in die Höhe zu treiben. Ein weiteres Ziel ist die Realisierung eines möglichst verlustfreien Standby-Betriebs des Gerätes, d.h. das oder die verbauten Schaltnetzteile sollen im Standby-Betrieb möglichst keine Leistung aufnehmen.

Es wird daher nach Lösungen gesucht, die bei Kühl- und/oder Gefriergeräten Energie- und Kosteneinsparungen bei der Spannungsversorgung der elektrischen Verbraucher eines Kühl- und/oder Gefriergerätes gestatten.

Gelöst wird diese Aufgabe durch ein Kühl- und/oder Gefriergerät gemäß den Merkmalen des Anspruchs 1. Vorteilhafte Ausgestaltungen des Kühl- und/oder Gefriergerätes sind Gegenstand der abhängigen Ansprüche.

Als Ausgangsbasis dient ein Kühl- und/oder Gefriergerät mit einem Netzanschluss und wenigstens einem Schaltnetzteil zur Spannungsversorgung wenigstens eines elektrischen Verbrauchers des Gerätes. Erfindungsgemäß soll wenigstens ein Schaltwandler des verbauten Schaltnetzteiles ein Resonanzwandler sein. Der Schaltwandler bzw. der Resonanzwandler kann ein DC/DC-Wandler oder ein DC/AC-Wandler mit anschliessender Gleichrichtung sein.

Aufgrund des Kostendrucks werden bei konventionellen Kühl- und/oder Gefriergeräten vorzugsweise Schaltwandler mit möglichst wenigen Bauteilen (Transistoren) eingesetzt. Insbesondere kommen bisher AC/DC-Wandler in Form von Sperr- oder Abwärtswandlern zum Einsatz, die lediglich einen Schalttransistor aufweisen, und daher nur einen vergleichsweise geringen Wirkungsgrad haben.

Kern der Erfindung ist nunmehr die erfindungsgemäße Verwendung eines alternativen Wandlerkonzeptes, nämlich in Form eines Resonanzwandlers, der auf dem Prinzip eines Schwingkreises arbeitet. Entsprechende Schaltwandlertopologien benötigen zumindest zwei Speicherelemente, d.h. Kapazität und Induktivität. Für die Schwingungsanregung werden zudem Schaltelemente benötigt, wobei sich sinnvolle Topologien bereits mit nur zwei Schaltelementen (Transistoren) umsetzen lassen. Der gesamte Wandleraufbau ist daher vergleichsweise kostengünstig.

Die vorgeschlagenen Resonanzwandler können jedoch auch einen weiteren Vorteil ausnutzen, indem der Ein- bzw. Ausschaltvorgang des Schaltteils auf den Nulldurchgang der Spannung (ZVS) oder des Stroms (ZCS) gelegt wird. Dadurch lassen sich Schaltverluste des Schaltwandlers nahezu eliminieren, der Wirkungsgrad steigt.

Neben den vorgenannten realen Resonanzwandlern ist auch die Verwendung sogenannter Quasi-Resonanzwandler denkbar. Ein möglicher Quasi-Resonanzwandler basiert auf der Topologie eines Sperrwandlers, der jedoch durch modifizierte Ansteuerung des Schalttransistors als Quasi-Resonanzwandler arbeitet, indem die Induktivität der Primärwicklung zusammen mit der parasitären Kapazität des Schalttransistors bzw. eines Zwischenkreises zur aktiven bzw. gesteuerten Schwingungsanregung ausgenutzt wird.

Ein weiteres Potenzial zur Einsparung von Energie bei dem Kühl- und/oder Gefriergerät ergibt sich vorzugsweise durch den Einsatz eines Synchrongleichrichters innerhalb des Schaltnetzteils des Gerätes. Bei der entsprechenden synchronen Gleichrichtung wird beispielsweise anstatt einer Diode ein von der Sperrspannungs- und Stromfähigkeit vergleichbarer MOSFET-Transistor eingesetzt. Die Bodydiode des MOSFETs arbeitet in diesem Fall als Ersatz der ursprünglichen Sperrdiode. Auch durch diese Maßnahme kann eine Steigerung des Wirkungsgrades des Schaltnetzteils erzielt werden.

Eine weitere Möglichkeit zur Kosteneinsparung bei der Herstellung derartiger Schaltnetzteile für Kühl- und/oder Gefriergeräte ergibt sich beispielsweise durch den Einsatz ein- oder mehrerer Planartransformatoren. Eine mögliche Ausgestaltung des Planartransformators kann auf der Ausnutzung einer Platine als Spulenkörper des Transformators basieren, besonders bevorzugt sind die Wicklungen wenigstens einer Transformatorspule zumindest teilweise durch Leiterbahnen der Platine gebildet.

Die Vorteile dieser Lösung bestehen insbesondere in der verringerten Bauhöhe und der resultierenden Platzeinsparung als auch durch zusätzliche Einsparung von Kupfer und Wickelkörpern, wodurch sich die Kosten für die Herstellung des Netzteiles verringern lassen. Zwar ist die Leistungsdichte eines konventionellen Überträgers höher, jedoch kann sich dieser Umstand beim Einsatz des Planartransformator für ein Schaltnetzteil des Kühl- und/oder Gefriergerätes aufgrund der vergleichsweise geringen Leistungsaufnahme vernachlässigt werden. Eine höhere Leistungsdichte des Planartransformators könnte bevorzugt durch Verwendung einer Multilayerplatine oder extrem dünne Leiterbahnen erzielt werden.

Die erzielbare Leistungsdichte eines Transformators hängt unmittelbar von der Dimensionierung des verbauten Magnetkerns ab. Eine Vergrößerung kommt bei Kühl- und/oder Gefriergerätes aus Platz- und Kostengründen nicht in Betracht. Gemäß einer bevorzugten Ausführung der Erfindung wird daher vorgeschlagen, in den Flusspfad wenigstens eines Transformators des Schaltnetzteiles wenigstens ein vormagnetisiertes Bauelement einzusetzen, um die Energiedichte zu erhöhen. Bevorzugt wird wenigstens ein Magnet in den Magnetkern eingesetzt.

Eine weitere Erhöhung des Wirkungsgrades des Schaltnetzteils kann beispielsweise auch dadurch erzielt werden, dass als Sperrdiode beispielsweise eine sogenannte Siliziumkarbit-Diode (SiC-Diode) zum Einsatz kommt, die sich durch eine extrem kleine Sperrerholzeit auszeichnet. Dadurch lassen sich extrem niedrige Ausschaltverluste realisieren. Alternativ eignet sich auch ein Einsatz eines SiC-MOSFET, der im Vergleich zu konventionellen Si-Chips eine kleinere Rds,on/Fläche aufweist. Denkbar ist ebenfalls, dass das Schaltnetzteil wenigstens einen MOSFET-Transistor auf Grundlage eines GaN Substrates aufweist. Aufgrund der damit verbundenen kleineren Gatekapazitäten kann das Schaltnetzteil schneller und effizienter schalten.

In einer besonderen Ausführungsform der Erfindung ist das Schaltnetzteil ein Inverter für die Ansteuerung wenigstens eines Kompressors, bevorzugt ein drehzahlregelbarer Kompressor.

Besonders bevorzugt ist es, wenn der integrierte Steuerungsbaustein des Inverters einen dedizierten Schaltwandler umfasst, so dass die Energieversorgung des Steuerungsbausteins unabhängig von den weiteren Inverterkomponenten sichergestellt ist. Diese Maßnahme ermöglicht die vollständige Deaktivierung des eigentlichen Inverterschaltwandlers bzw. dessen Trennung von der Versorgungspannung, was zu einem geringeren Leistungsbedarf des Schaltnetzteiles in einem Standby-Betrieb führt.

Eine weitere Optimierungsmöglichkeit zur Reduzierung der Lastaufnahme im Standby-Modus besteht darin, dass der Inverter und/oder der Zwischenkreis des Inverters mittels wenigstens eines gesonderten Schaltelements von der Netzspannung trennbar ist. Idealerweise wird der gesamte Inverter von der Netzspannung getrennt, alternativ kann es ausreichend sein, lediglich den Zwischenkreis über ein Schaltelement von der Netzspannung zu trennen. Als mögliche Schaltelemente dienen beispielsweise ein sogenannter Opto-FET und/oder ein Solid-state relay.

Üblicherweise treten im Zwischenkreis bzw. dem darin verbauten Zwischenkreiskondensator Leckage-Ströme auf, deren vollständige Verhinderung - wenn überhaupt - nur unter großem technischem Aufwand möglich ist. Durch die Trennung zumindest des Zwischenkreises von der Netzversorgung sinkt die Leistungsaufnahme des Inverters im Standby-Betrieb auf ein Minimum. Die Leistungsversorgung der übrigen Inverterkomponenten kann währenddessen aus der im Zwischenkreis gespeicherten Energie erfolgen.

Besonders vorteilhaft ist es, wenn ein Steuerungsbaustein vorgesehen ist, der den Inverter bzw. den Zwischenkreis mittels des Schaltelementes von der Netzspannung trennt, falls sich das Kühl- und/oder Gefriergerät im Standby-Modus befindet. Idealerweise erfolgt in diesem Zustand eine Überwachung des Speicherzustands des Zwischenkreises durch den Steuerungsbaustein, d.h. des Ladungszustandes des Zwischenkreiskondensators. Bei Unterschreiten einer entsprechenden Ladungsgrenze wird durch ein kurzzeitiges Wiederherstellen der Verbindung zur Netzspannung mittels des Schaltelementes der Zwischenkreisspeicher erneut aufgeladen. Nach Erreichen einer Zielladung wird die Verbindung erneut getrennt. Dadurch wird sichergestellt, dass eine Energieversorgung aus dem Zwischenkreis zumindest für die wichtigen Komponenten des Schaltnetzteils, insbesondere integrierte Steuerungsbausteine bestehen bleibt, um das Gerät aus dem Standby-Modus aufzuwecken.

Weitere Vorteile und Eigenschaften der Erfindung sollen im Folgenden anhand mehrerer Ausführungsbeispiele näher erläutert werden. Es zeigen:
- Figur 1:: ein Beispiel eines LLC-Resonanzwandlers;
- Figur 2:: ein weiteres Beispiel eines LLC-Resonanzwandlers;
- Figur 3:: ein Beispiel eines als Quasi-Resonanzwandler arbeitenden Sperrwandler mit dem entsprechenden Verhalten der Transistorspannung;
- Figur 4:: ein Beispiel für die Synchrongleichrichtung beim Sperrwandler
- Figur 5:: eine beispielhafte Abbildung eines Planartransformators,
- Figur 6:: ein Beispiels für einen von der Netzversorgung trennbaren Zwischenkreis und
- Figur 7:: ein Beispiel für eine mögliche Modifikation des Sollspannung des Schaltwandlers zur Leistungsreduktion.

Die Thematik von Schaltwandlertopologien und der Wirkungsgradsteigerung sind eng miteinander verknüpft. Mit der Wahl der Topologie werden nahezu 90% der Eckpunkte und Eigenschaften festgelegt. Der Wirkungsgrad geht meist mit der Ausnutzung der eingesetzten Bauteile, insbesondere von Induktivitäten, einher. Weitere Verbesserungen sind nur unter erhöhtem Aufwand erzielbar.

Die vorliegende Erfindung beschäftigt sich mit der Modifikation bestehender Inverterschaltungen für die Ansteuerung des Kompressors eines Kühl- und/oder Gefriergerätes. Dabei wird unter anderem die Steigerung des Wirkungsgrades, eine Kostenreduktion der Topologie als auch eine Verringerung der Leistungsaufnahme im Standby-Betrieb angestrebt.

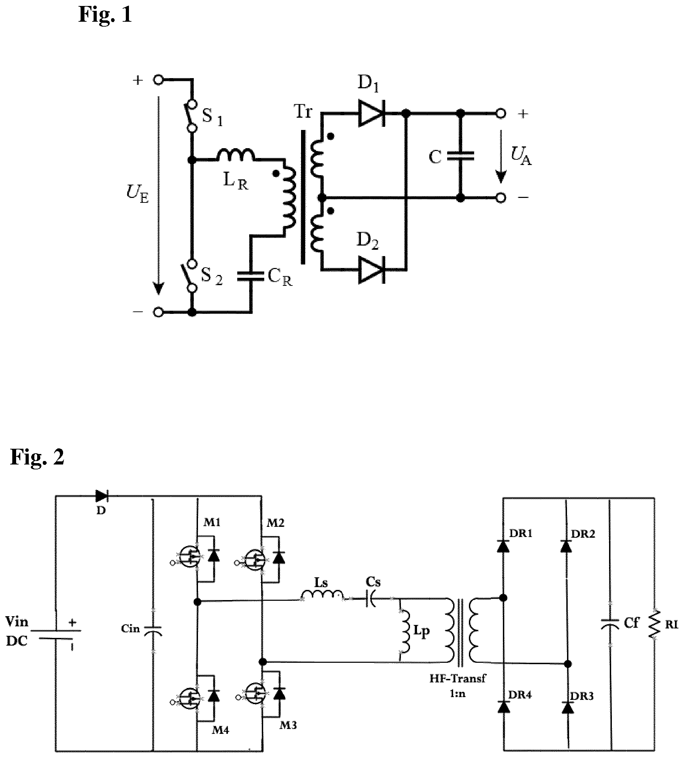

Aus diesem Grund kommt innerhalb des eingesetzten Schaltnetzteils ein sogenannter Resonanz- oder Quasi-Resonanzwandler als Schaltwandler zum Einsatz. Der Schaltwandler kann ein DC/DC oder DC/AC-Wandler sein. Der Begriff Resonanz gehört zur Beschreibung eines Schwingkreises und drückt die Fähigkeit aus, eine Schwingung ohne äußere Einwirkungen über einen Zeitraum zu vollziehen. Für einen elektrischen Schwingkreis sind dafür mindestens zwei Energiespeicher notwendig, was bei Schaltwandlern durch Induktivität und Kapazität bewerkstelligt wird. Bei einem realen Resonanzwandler regen die Schalttransistoren den Schwingkreis an. Weiterhin lassen sich Schaltverluste weitestgehend dadurch minimieren, indem die Ein- und Ausschaltvorgänge auf den Nulldurchgang der Spannung ("zero voltage switching ZVS") oder des Stroms ("zero current switching ZCS") gelegt werden. Beispiele für geeignete Resonanzwandler für den Einsatz in einem Schaltnetzteil eines Kühl- und/oder Gefriergerätes sind in den Figuren 1 und 2 dargestellt.

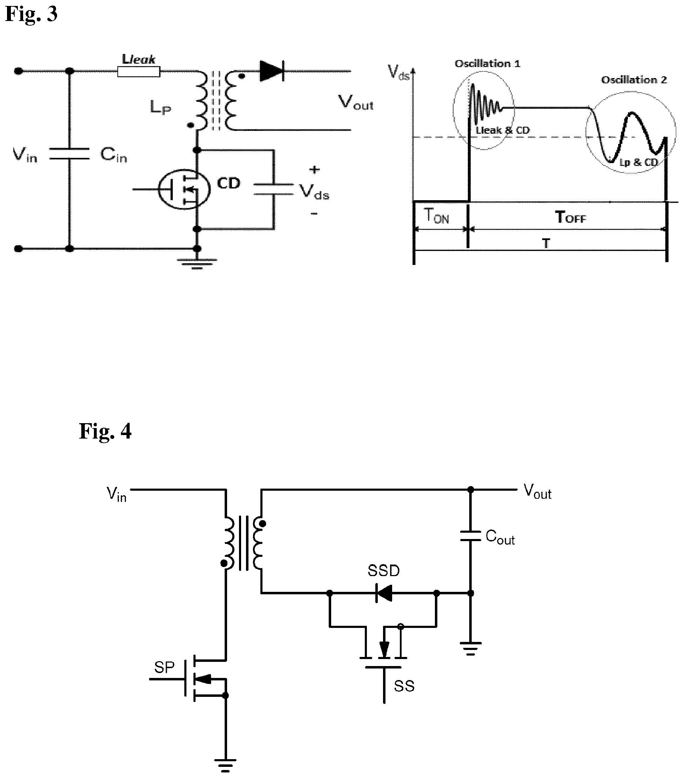

Eine Alternative zu einem echten Resonanzwandler ist ein sogenannter Quasi-Resonanzwandler. Ein mögliches Beispiel ist in der Figur 3 dargestellt. Auch hier lässt sich der Effekt von ZVS oder ZCS ausnutzen. In dem gezeigten Beispiel bilden die Induktivität der Primärwicklung L_{P} mit der parasitären Kapazität des Schalttransistors C_{D} und dem Zwischenkreis Cᵢₙ einen Schwingkreis, der nach Abklingen des Stroms auf der Sekundärseite zu schwingen beginnt (Oszillation 2). Die Spannung V_{ds} über dem Schalttransistor C_{D} oszilliert und schwingt sich irgendwann auf die Höhe der Zwischenkreisspannung ein. Würde man den Transistor vorher zu einem Zeitpunkt des "Taldurchgangs" einschalten, würden die Einschaltverluste minimiert werden.

Als weitere Option wird bei dem erfindungsgemäßen Kühl- und/oder Gefriergerät eine synchrone Gleichrichtung eingesetzt. Das Prinzip ist in der Figur 4 dargestellt. Hierbei wird anstatt einer Diode für die Gleichrichtung ein von der Sperrspannung und Stromfähigkeit her vergleichbarer MOSFET eingesetzt. Die Body-Diode des verwendeten MOSFET fungiert als Ersatz zur konventionellen Sperrdiode bekannter Gleichrichter. In dem Moment, wenn die Diode in dem Durchlassbetrieb übergeht, wird der MOSFET eingeschaltet und reduziert die entstehenden Durchlassverluste. Es gibt sowohl spezielle Controller als auch passive Lösungen zum Ansteuern des MOSFET zum richtigen Zeitpunkt.

Im Bereich konventioneller Schaltnetzteile werden aufgrund des Kostendrucks nahezu ausschließlich konventionelle Elemente auf Siliziumbasis verwendet. Die erfindungsgemäße Lösung sieht optional nunmehr vor, insbesondere im Hinblick auf die Relevanz des Wirkungsgrades, sogenannte Siliziumkarbit-Dioden (SiC-Dioden) innerhalb des Netzteiles zu verbauen. Derartige SiC-Dioden zeigen eine minimale Sperrerholungszeit, was extrem niedrige Ausschaltverluste ermöglicht. Für die verbauten MOSFETs des Schaltnetzteils lassen sich sogenannte GaN-MOSFETs einsetzten, die aufgrund ihrer kleineren Gate-Kapazitäten schneller und effizienter schalten können.

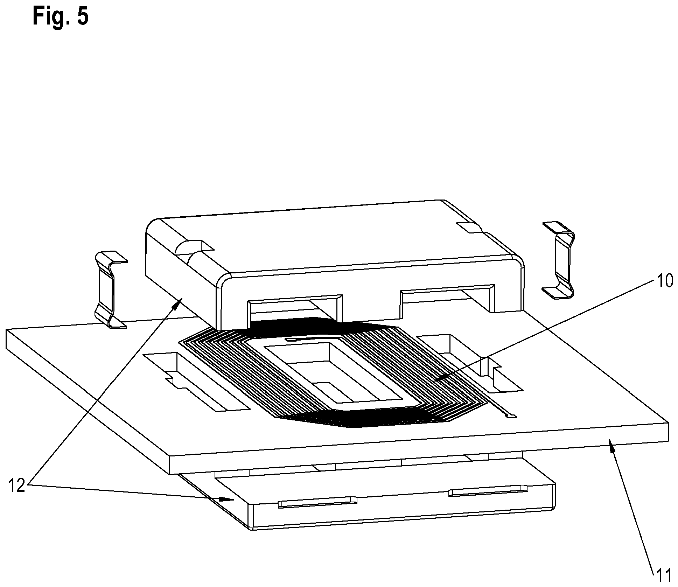

Auch die induktiven Bauelemente des Schaltnetzteils, insbesondere die Transformatoren werden modifiziert, um die entstehenden Produktionskosten zu reduzieren. Besonders bevorzugt kommt ein sogenannter Planarkern für die Bildung eines Transformators zum Einsatz. Die Grundidee eines Planarkerns besteht in der Nutzung der Platine als Spulenkörper. Besonders bevorzugt wird hier die Wicklung der Induktivität durch Leiterbahnen gebildet, die auf der den Planarkern bildenden Platine aufgebracht sind. Figur 5 zeigt den entsprechenden Transformator für den Schaltwandler des Kühl- und/oder Gefriergerätes. Die Wicklungen liegen als Leiterbahnen 10 auf bzw. in der Leiterplatte 11 vor, der zweiteilige Ferrit-Transformatorkern 12 wird von beiden Seiten auf die Platine 11 geklebt oder geklemmt, die hierzu Durchbrüche besitzt. Die Vorteile der Lösung bestehen in der verringerten Bauhöhe und in der Einsparung von Kupfer.

Sehr viele Schaltwandler bestromen die induktiven Bauelemente mit einem unipolaren Strom. Dadurch nutzt man die magnetischen Eigenschaften nur zur Hälfte aus, denn die Ansteuerung findet in einem Quadranten der B-H-Kennlinie statt. Braucht man mehr Energie, muss der Strom zunehmen, was aber unter Umständen aufgrund der Sättigung nicht möglich ist. Somit ist es oftmals erforderlich, den Weg der Vergrößerung des Magnetkerns einzuschlagen, um eine höhere Stromübertragung zu ermöglichen. In der vorliegenden Erfindung wird eine alternative Option vorgeschlagen. Wenigstens ein Magnet ist optional in den Flusspfad eines Transformators platziert, um damit eine Nullpunktverschiebung der B-H-Kennlinie des Transformators zu erreichen. Bei geeigneter Auslegung kann bei dem gleichen Kern fast eine Verdopplung der Stromübertragung erreicht werden, was zu einer Vervierfachung der magnetischen Energie führt.

Ein weiteres Ziel bei der Herstellung von Schaltnetzteilen für Kühl- und/oder Gefriergeräte ist das Erreichen einer möglichst kleinen Leistungsaufnahme im Stand-by-Betrieb, idealerweise 0W. Zwar ist die 0W-Vorstellung kaum realisierbar, jedoch schlägt die vorliegende Anmeldung eine Alternative vor, bei der die Verlustleistung zumindest für gewisse Zeitabschnitte auf 0W gedrückt werden kann.

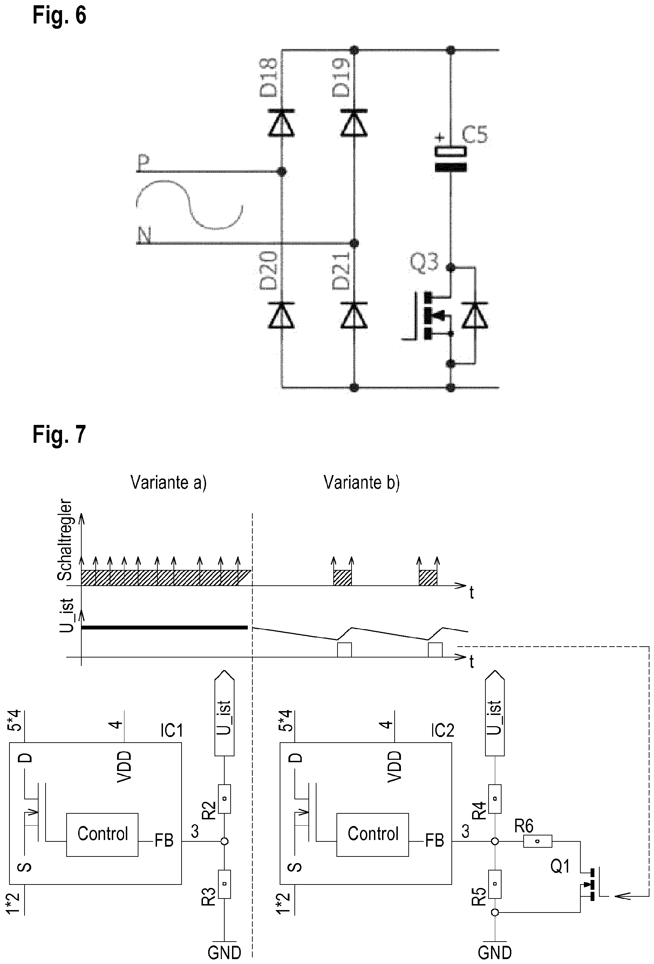

Der größte Verbrauch im Leerlauf entfällt bei einem Inverter in der Regel auf die Treiber, den Schaltwandler und den Zwischenkreiskondensator. Danach folgen die Endstufe und der Mikrocontroller des Inverters. Geht man in Richtung der Energiereduktion, so lassen sich folgende Ansätze wählen:
1. Denkbar ist es, dass die Treiber der Inverterschaltung über eine abschaltbare Spannung versorgt sind, so dass deren Leistungsaufnahme auf Null reduziert werden kann. Allerdings muss hier sichergestellt sein, dass bei Unterschreiten der zulässigen Versorgungsspannung die Gates der Transistoren sicher im ausgeschalteten Zustand verbleiben. Eine alternative Möglichkeit besteht darin, insbesondere bei Halbbrückentreibern (hier gibt es in der Regel zwei Versorgungen (Primär und Highside)), diejenigen mit dem größten Verbrauch abzuschalten, wobei zumindest Low oder Highside im sicheren Auszustand verbleiben.
2. Der Schaltwandler eines Inverters lässt sich nicht ohne weiteres abschalten und von der Spannung trennen, denn ein Wiederanlauf muss stets garantiert sein. Entweder wird ein extrem sparsamer Schaltwandler eingesetzt oder alternativ wird für den Mikrocontroller des Inverters ein eigener Schaltwandler implementiert, sodass zumindest das Steuermodul während der Abschaltung einsatzbereit bleibt. Dadurch lässt sich der Betrieb des Schaltwandlers jederzeit wieder aufnehmen. Damit erreicht man auch eine hohe Flexibilität.
3. Innerhalb des Zwischenkreises bzw. des verbauten Kondensators kommt es im StandyBy-Betrieb zu Leckageströmen, die den Leistungsbedarf im Standby-Modus ansteigen lässt. Hierfür gibt es zwar geeignete Maßnahmen, eine weitere Erhöhung der Leistungsaufnahme ist jedoch nur unter enormen Aufwand möglich. Die Erfindung schlägt daher einen alternativen Weg vor, der darin besteht, einen Schalter am Eingang des Zwischenkreises zu platzieren, beispielsweise einen Opto-FET oder ein Solid-state relay, mit dem im Standby der Inverter von der Netzspannung getrennt wird. Alle Komponenten beziehen solange Strom aus dem Zwischenkreiskondensator, bis die Spannung unter eine gewisse Grenze fällt. Danach wird der Inverter bzw. der Zwischenkreis wieder kurz an die Netzspannung gekoppelt, um den Kondensator des Zwischenkreises erneut aufzuladen. Es muss hierzu festgestellt werden, wo das Optimum zwischen Ladedauer, Ladespannung und Verbrauch liegt.
   Anstatt des Schalters könnte auch ein Transistor (z.B. MOSFET mit Freilaufdiode) in Serie zum Zwischenkreiskondensator verschaltet werden. Ist der Transistor ausgeschaltet, wird der Kondensator nicht mehr vom Netz gespeist, die interne Elektronik Versorgung kann allerdings über die Freilaufdiode weiterhin Energie beziehen. Ersichtlich ist diese Lösung in Figur 6, die einem zum Zwischenkreiskondensator C5 in Serie geschalteten MOSFET Q3 mit Freilaufdiode vorsieht.

Durch diese Maßnahme lässt sich der Standby-Verbrauch des Inverters zumindest zeitweise auf nahezu 0W drücken.

Eine zusätzliche Optimierung der Leistungsaufnahme des Schaltwandlers kann durch gezielte Modifikation des Feedback-Signals für den Schaltwandler/Schaltregler erreicht werden. Typische Schaltwandler bzw. Schaltregler sind zum grössten Teile analog aufgebaut und regeln stetig auf einen vorgegeben Sollwert. Im Stand-by Betrieb des Kühl- und/oder Gefriergerätes sinkt zwar der Verbrauch stark ab, allerdings wird der Sollwert kontinuierlich nachgeregelt. Der Schaltregler/Schaltwandler geht in den sog. Burst-Modus über. Unabhängig von der Schalttopologie tendiert der Wirkungsgrad mit kleiner werdender Ausgangsleistungen gegen 0. Der Gesamtverbrauch der Schaltung geht somit nicht proportional zur verringerten Stand-by-Leistung nach unten, sondern wird über den kleiner werdenden Wirkungsgrad des Wandlers "rückkompensiert".

Um diesem Umstand entgegenzuwirken soll der Sollwert für die Ausgangsspannung angepasst werden, so dass man anstatt einer kontinuierlichen Regelung eine Hystereseregelung anwendet. Zum einen erreicht man, dass während des Nichtschaltens keine Energie aus dem Netz gebraucht wird und während der Nachregelung befindet sich der Schaltwandler automatisch im höheren Leistungsbereich, wodurch dieser einen höheren Wirkungsgrad erreicht. Die Ansteuerung kann z.B. ein Mikrocontroller übernehmen. Ist die Spannung List zu niedrig, wird das Schaltelement Q1 des Schaltreglers kurzzeitig eingeschaltet. Übersteigt die Spannung Uᵢₛₜ die gewünschte Sollspannung wird der Schalter Q1 wieder abgeschaltet. Diese Vorgehensweise ist exemplarisch in Figur 7 angedeutet, die in den Diagrammen eine konventionelle Ansteuerung (Variante a) des Schaltwandlers der erfindungsgemäßen Modifikation der Sollspannung (Variante b) gegenüber stellt.

## Patentansprüche

1. Kühl- und/oder Gefriergerät mit einem Netzanschluss und wenigstens einem Schaltnetzteil zur Spannungsversorgung wenigstens eines elektrischen Verbrauchers,
**dadurch gekennzeichnet,**
**dass** ein Schaltwandler des wenigstens einen Schaltnetzteils ein Resonanzwandler ist.

2. Kühl- und/oder Gefriergerät, **dadurch gekennzeichnet, dass** der Schaltwandler ein als Quasi-Resonanzwandler angesteuerter Sperrwandler ist.

3. Kühl- und/oder Gefriergerät nach einem der vorhergehenden Ansprüche, **dadurch gekennzeichnet, dass** das wenigstens eine Schaltnetzteil einen Synchrongleichrichter für die Gleichrichtung der Netzspannung umfasst.

4. Kühl- und/oder Gefriergerät, **dadurch gekennzeichnet, dass** das Schaltnetzteil ein oder mehrere Planartransformatoren umfasst, wobei wenigstens ein Planartransformator vorzugsweise eine Platine als Spulenkörper nutzt, besonders bevorzugt sind dessen Wicklungen zumindest teilweise durch Leiterbahnen der Platine gebildet.

5. Kühl und/oder Gefriergerät nach einem der vorhergehenden Ansprüche, **dadurch gekennzeichnet, dass** im Flusspfad wenigstens eines Transformators des Schaltnetzteils wenigstens ein Magnet eingesetzt ist, um die Energiedichte des Transformators zu erhöhen.

6. Kühl- und/oder Gefriergerät nach einem der vorhergehenden Ansprüche, **dadurch gekennzeichnet, dass** wenigstens eine Diode des Schaltnetzteils eine SiC-Diode ist und/oder wenigstens ein Schalttransistor wenigstens ein GaN-MOSFET Transistor ist.

7. Kühl- und/oder Gefriergerät nach einem der vorhergehenden Ansprüche, **dadurch gekennzeichnet, dass** das Schaltnetzteil ein Inverter für die Ansteuerung wenigstens eines Kompressors ist.

8. Kühl- und/oder Gefriergerät nach Anspruch 7, **dadurch gekennzeichnet, dass** der integrierte Steuerungsbaustein des Inverters einen dedizierten Schaltwandler umfasst und vorzugsweise Mittel zur Trennung des Inverterschaltwandlers von der Versorgungsspannung während eines Standby-Betriebes aufweist.

9. Kühl- und/oder Gefriergerät nach einem der vorhergehenden Ansprüche, **dadurch gekennzeichnet, dass** der Inverter und/oder der Zwischenkreis des Inverters mittels wenigstens eines Schaltelementes, vorzugsweise mittels eines Opto-FETs und/oder Solid-state relays, von der Netzspannung trennbar ist, wobei das Schaltelement idealerweise am Eingang des Zwischenkreises angeordnet ist.

10. Kühl- und/oder Gefriergerät nach Anspruch 9, **dadurch gekennzeichnet, dass** ein Steuerungsbaustein vorgesehen ist, der derart ausgeführt ist, dass der Inverter bzw. zumindest der Zwischenkreis mittels des Schaltelementes von der Netzspannung trennbar ist, falls sich das Kühl- und/oder Gefriergerät im Standby-Modus befindet, und idealerweise der Ladezustand des Zwischenkreises gegen einen minimalen Ladewert überwachbar ist und weiter bevorzugt bei Unterschreiten des Ladegrenzwertes das Schaltelement zum Laden des Zwischenkreis aus der Netzspannung betätigbar ist.

11. Kühl- und/oder Gefriergerät nach einem der vorhergehenden Ansprüche, **dadurch gekennzeichnet, dass** wenigstens ein Transistor, insbesondere ein MOSFET mit Freilaufdiode, in Serie zu einem Zwischenkreiskondensator des Zwischenkreises verschaltet ist, wobei vorzugsweise der Kondensator bei geöffnetem Transistor nicht von Netz speisbar ist, von der internen Elektronik des Kühl- und/oder Gefriergerätes über die Freilaufdiode jedoch Energie aus dem Zwischenkreiskondensator abgreifbar ist.

12. Kühl- und/oder Gefriergrät nach einem der vorhergehenden Ansprüche, **dadurch gekennzeichnet, dass** ein Steuerbaustein mit einer Steuerlogik vorgesehen ist, der im Stand by Betrieb den Sollwert für die Ausgangsspannung des Schaltwandler derart anpasst, so dass anstatt einer kontinuierlichen Regelung eine Hystereseregelung angewendet wird.
